# EUROPEAN PATENT APPLICATION

(11) **EP 4 350 965 A1**
(43) Date of publication of application: **10.04.2024**
(21) Application number: 23195176.5
(22) Date of filing: 04.09.2023
(51) Int. Cl.: H02M 1/12

(54) **CURRENT INJECTION TYPE ACTIVE FILTER AND CIRCUIT**

(30) Priority: 03.10.2022 JP 2022159488
(71) Applicant: Toshiba Carrier Corporation, Kawasaki-Shi, Kanagawa 212-8585 (JP)
(72) Inventor: OBANA, Kohei, TOKYO, 105-0023 (JP)
(74) Representative: AWA Sweden AB

(57) **Abstract**

According to one embodiment, a current injection type active filter includes a detection transformer, an amplifier circuit, an oscillation suppression circuit, and an injection transformer. The detection transformer includes a first main winding connected to one of power supply lines and a first sub winding disposed in proximity to the first main winding. The amplifier circuit includes an operational amplifier having an input terminal connected to the first sub winding, and a feedback circuit connected between the input terminal and an output terminal of the operational amplifier. The oscillation suppression circuit is inserted into the feedback circuit. The oscillation suppression circuit suppresses oscillation of the amplifier circuit. The injection transformer includes a second main winding connected to the one of the power supply lines and a second sub winding disposed in proximity to the second main winding and connected to an output terminal of the amplifier circuit.

## Description

### FIELD

Embodiments described herein relate generally to a current injection type active filter for reducing common-mode noise, and a circuit using the same.

### BACKGROUND

A switching inverter may be used to drive a load such as a motor. In such a switching inverter, common-mode noise is generated during a switching operation. A noise filter has been used to suppress the inflow into another circuit and radiation of a common mode current generated by common-mode noise. As such a noise filter, for example, a passive filter composed of a passive element such as a common mode choke coil and a Y capacitor has been used. In addition, as a noise filter, an active filter that actively cancels noise using an active element such as an amplifier circuit composed of a semiconductor element has also been proposed. Such an active filter cancels noise by detecting a common-mode current flowing through a power supply line, amplifying the detected common-mode current with an amplifier circuit, and then returning the amplified current in a reverse phase to the power supply line.

The active filter cancels noise by injecting a current in a reversed phase (-180 °) with respect to the detected common-mode current into the power supply line. However, depending on the frequency of the common-mode current, noise may be undesirably increased by a current whose phase has changed in the direction (0°) of the phase of the common-mode current being injected into the power supply line. Specifically, the amplification of noise continues to cause oscillation in the circuit in the case where the phase shifts toward the side of 0° rather than -90° when a gain of an injection current with respect to the common-mode current is 0 or greater.

Embodiments provide an active filter having a high filtering effect while suppressing oscillation, and a circuit using the same.

### BRIEF DESCRIPTION OF THE DRAWING

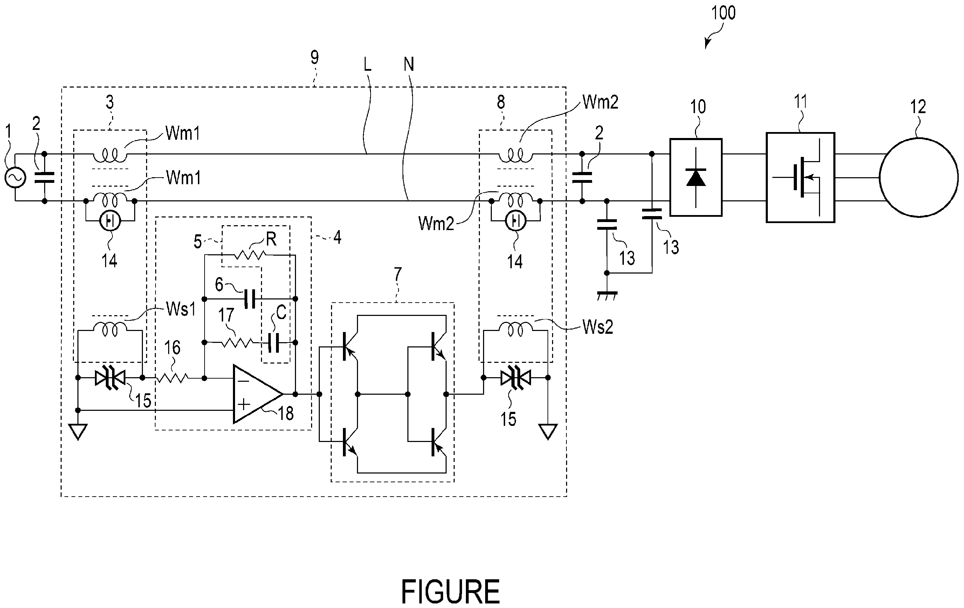

FIG. 1 is a diagram schematically showing a configuration example of an inverter circuit including an active filter according to an embodiment.

### DETAILED DESCRIPTION

In general, according to one embodiment, a current injection type active filter includes a detection transformer, an amplifier circuit, an oscillation suppression circuit, and an injection transformer. The detection transformer includes a first main winding connected to one of power supply lines and a first sub winding disposed in proximity to the first main winding. The amplifier circuit includes an operational amplifier having an input terminal connected to the first sub winding, and a feedback circuit connected between the input terminal and an output terminal of the operational amplifier. The oscillation suppression circuit is inserted into the feedback circuit. The oscillation suppression circuit suppresses oscillation of the amplifier circuit. The injection transformer includes a second main winding connected to the one of the power supply lines and a second sub winding disposed in proximity to the second main winding and connected to an output terminal of the amplifier circuit.

Embodiments will be described with reference to the drawings. FIG. 1 is a diagram schematically showing a configuration example of an inverter circuit including an active filter according to an embodiment.

An inverter circuit 100 includes a power supply 1, an active filter 9, a rectifier circuit 10, and an inverter 11. Power supply lines Live (L) and Neutral (N) are wired between the inverter circuit 100 and the power supply 1. Furthermore, an X capacitor 2 is connected between the power supply line L and the power supply line N on the input side of the active filter 9 and another X capacitor 2 is connected between the power supply line L and the power supply line N on the output side of the active filter 9. Each of the X capacitors 2 is inserted between the power supply lines L and N in order to bypass a normal-mode noise generated between the power supply lines L and N. Furthermore, a Y capacitor 13 is connected between the power supply line L on the output side of the active filter 9 and earth, and another Y capacitor 13 is connected between the power supply line N on the output side of the active filter 9 and earth. Each of the Y capacitors 13 is inserted into each of the power supply lines L and N in order to bypass common-mode noise generated in the power supply lines L and N due to a switching operation.

The power supply 1 is, for example, a commercial power supply and generates an AC voltage of a predetermined frequency. The AC voltage generated by the power supply 1 is applied to the rectifier circuit 10 via the active filter 9.

The active filter 9 is a filter inserted between the power supply 1 and the rectifier circuit 10 and configured to actively reduce the common-mode noise generated in the power supply lines L and N due to the switching operation of the inverter 11. The active filter 9 will be described later.

The rectifier circuit 10 is connected to the power supply 1 via the active filter 9 and converts the AC voltage applied by the power supply 1 into a DC voltage. The DC voltage converted by the rectifier circuit 10 is applied to the inverter 11.

The inverter 11 includes, for example, a bridge inverter circuit configured by bridge-connecting a plurality of semiconductor switching elements, and converts the DC voltage applied from the rectifier circuit 10 into the AC voltage of a desired frequency and amplitude necessary for driving the load 12, through the switching operation of each of the semiconductor switching elements. The AC voltage converted by the inverter 11 is applied to the load 12.

The load 12 is, for example, a three-phase motor configured to drive a compressor of an air conditioner, and operates according to the AC voltage applied by the inverter 11.

Next, the active filter 9 will be described. The active filter 9 according to the embodiment includes a detection transformer 3, an amplifier circuit 4, an oscillation suppression circuit 5, an emitter follower circuit 7, and an injection transformer 8.

The detection transformer 3 has main windings Wm1 respectively inserted into the power supply lines L and N on the power supply 1 side, and a sub winding Ws1 disposed in proximity to the main winding Wm1 inserted into the power supply line N. Each of the main windings Wm1 forms a common-mode choke coil to reduce common-mode noise. Furthermore, the main windings Wm1 form, in combination with the sub winding Ws1, a transformer. The transformer detects a common-mode current flowing through the main winding Wm1 due to the common-mode noise, by electromagnetic induction of the main winding Wm1 and the sub winding Ws1. One end of the sub winding Ws1 is connected to the amplifier circuit 4. The other end of the sub winding Ws1 is connected to ground. That is, the sub winding Ws1 is insulated from earth.

The amplifier circuit 4 is an inverting amplifier circuit using the operational amplifier 18. A negative input terminal of the operational amplifier 18 is connected to the sub winding Ws1 via a resistor 16. A positive input terminal of the operational amplifier 18 is connected to ground. An output terminal of the operational amplifier 18 is connected to the emitter follower circuit 7. Furthermore, a negative feedback circuit is inserted between the output terminal and the negative input terminal of the operational amplifier 18. The negative feedback circuit includes a resistor 17 inserted between the output terminal and the negative input terminal of the operational amplifier 18, and a capacitor 6 connected in parallel with the resistor 17. The amplifier circuit 4 performs voltage amplification on output of the detection transformer 3. An amplification factor of the amplifier circuit 4 is determined through a circuit simulation in consideration of the number of turns of the sub winding Ws1, a resistance ratio between the resistor 16 and the resistor 17, etc.

Furthermore, in the embodiment, the oscillation suppression circuit 5 is inserted into the negative feedback circuit of the operational amplifier 18. The oscillation suppression circuit 5 includes a capacitor C connected in series with the resistor 17, and a resistor R connected in parallel with the resistor 17 and the capacitor 6. The oscillation suppression circuit 5 suppresses oscillation in the amplifier circuit 4 by adjusting a gain of the amplifier circuit 4 by advancing a phase at a specific low frequency component of a current negatively fed back from the output terminal of the operational amplifier 18. The adjustment amount of phase and gain of the oscillation suppression circuit 5 is determined through the circuit simulation in consideration of the number of turns of the sub winding Ws1, a resistance ratio between the resistor 16 and the resistor 17, an electrostatic capacitance of the capacitor C, a resistance value of the resistor R, etc.

The emitter follower circuit 7 is, for example, an emitter follower circuit of a push-pull type. The emitter follower circuit 7 performs current amplification on output of the operational amplifier 18.

The injection transformer 8 has main windings Wm2 respectively inserted into the power supply lines L and N on the rectifier circuit 10 side, and a sub winding Ws2 disposed in proximity to the main winding Wm2 inserted into the power supply line N. The main winding Wm2 forms a common-mode choke coil to reduce common-mode noise. Furthermore, the main windings Wm2 form, in combination with the sub winding Ws2, a transformer. The transformer injects into the power supply line N a current flowing from the emitter follower circuit 7 into the sub winding Ws2, by electromagnetic induction of the sub winding Ws2 and the main windings Wm2. One end of the sub winding Ws2 is connected to the emitter follower circuit 7. The other end of the sub winding Ws2 is connected to ground. That is, the sub winding Ws2 is insulated from earth.

Furthermore, in the embodiment, in order to prevent a component such as the amplifier circuit 4 from being destroyed by a high-voltage surge such as lightning entering the inverter circuit 100, a gas arrester 14 serving as a surge protective element is inserted in parallel with the main winding Wm1 on, e.g., the power supply line N side of the detection transformer 3, and another gas arrester 14 serving as a surge protective element is inserted in parallel with the main winding Wm2 on, e.g., the power supply line N side of the injection transformer 8. Similarly, in the embodiment, in order to prevent a component such as the amplifier circuit 4 from being destroyed by a high-voltage surge such as lightning entering the inverter circuit 100, a Zener diode 15 serving as a surge protective element is inserted in parallel with the sub winding Ws1 of the detection transformer 3, and another Zener diode 15 serving as a surge protective element is inserted in parallel with the sub winding Ws2 of the injection transformer 8. The surge protective elements are not limited to the gas arrester and the Zener diode. As the surge protective element, another surge protective element such as a varistor may be used, or an arrester and a varistor may be used in combination.

Next, the operation of the inverter circuit 100 will be described. The AC voltage generated by the power supply 1 is converted into a DC voltage through rectification by the rectifier circuit 10. Based on the DC voltage converted by the rectifier circuit 10, the switching operation of the inverter 11 generates an AC voltage necessary for the operation of the load 12. The load 12 is driven with the AC voltage generated by the inverter 11.

The common-mode current, which is caused due to the common-mode voltage generated through the switching operation of the inverter 11, returns to the power supply 1 side via the stray capacitance of the load 12, so that the common-mode current flows into the power supply line N. The common-mode current which has flown into the power supply line N is detected by the detection transformer 3.

The common-mode current detected by the detection transformer 3 is subjected to voltage amplification in the amplifier circuit 4 and is then subjected to current amplification in the emitter follower circuit 7. The current amplified by the emitter follower circuit 7 is returned in the reverse phase of the common-mode current by the injection transformer 8 to the power supply line N. By this, the common-mode current and the injection current cancel each other, so that the common-mode current is canceled.

Herein, in the embodiment, the oscillation suppression circuit 5 is provided with respect to the amplifier circuit 4. Increasing the effectiveness of an active filter only requires increasing the amplification factor of the amplifier circuit 4. Herein, in the case where, in response to the amplification factor over a certain level being set, the oscillation suppression circuit 5 is not provided in a certain low frequency component, the phase of the injection current shifts from -90° toward 0° with respect to the phase of the common-mode current, and the gain becomes 0 dB or greater, thereby causing oscillation in the active filter 9.

The oscillation suppression circuit 5 in the embodiment advances the phase in a specific low frequency component of the current negatively fed back from the output terminal of the operational amplifier 18, thereby adjusting the phase in the low frequency component concerned. By this, the active filter 9 may avoid conditions under which oscillation occurs. On the other hand, the oscillation suppression circuit 5 does not affect the frequency component in which reduction of noise is desired. That is, the oscillation suppression circuit 5 affects only the low frequency component concerned even if the amplification factor of the amplifier circuit 4 is increased. Therefore, the filter effect can be improved by increasing the amplification factor of the amplifier circuit 4. The oscillation suppression circuit 5 is inserted into the negative feedback circuit of the operational amplifier 18 constituting the amplifier circuit 4. By the oscillation suppression circuit 5 being inserted into the negative feedback circuit of the operational amplifier 18, the oscillation suppression effect can be obtained without causing a decrease in the input impedance of the amplifier circuit 4.

In the embodiment, the emitter follower circuit 7 is provided in the latter stage of the amplifier circuit 4. By the emitter follower circuit 7 amplifying output of the amplifier circuit 4, a current injected by the injection transformer 8 can be increased. As a result, the effectiveness of the active filter 9 can be improved.

In the embodiment, the X capacitor 2 is connected between the power supply lines. In the embodiment, the Y capacitor 13 is connected between each power supply line and earth. The normal-mode noise may be passively suppressed by the X capacitor 2. Furthermore, the common-mode noise may be passively suppressed by the Y capacitor 13.

In the embodiment, the gas arrester 14 and the Zener diode 15 both serving as a surge protective element are attached to each of the detection transformer 3 and the injection transformer 8. Furthermore, the sub winding Ws1 of the detection transformer 3 and the sub winding Ws2 of the injection transformer 8 are each insulated from earth. This can prevent components of the amplifier circuit 4 and the emitter follower circuit 7 from being destroyed due to a high-voltage surge such as lightning.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A current injection type active filter comprising:
a detection transformer including a first main winding connected to one of power supply lines and a first sub winding disposed in proximity to the first main winding;
an amplifier circuit including an operational amplifier having an input terminal connected to the first sub winding, and a feedback circuit connected between the input terminal and an output terminal of the operational amplifier;
an oscillation suppression circuit inserted into the feedback circuit and configured to suppress oscillation of the amplifier circuit; and
an injection transformer including a second main winding connected to the one of the power supply lines and a second sub winding disposed in proximity to the second main winding and connected to an output terminal of the amplifier circuit.

2. The current injection type active filter according to claim 1, wherein
the feedback circuit includes a first resistor connected between a negative input terminal and the output terminal of the operational amplifier, and
the oscillation suppression circuit includes a second capacitor connected in series with the first resistor and a second resistor connected in parallel with the first resistor.

3. The current injection type active filter according to claim 2, wherein the feedback circuit further includes a first capacitor connected in parallel with the first resistor.

4. The current injection type active filter according to claim 1, further comprising an emitter follower circuit inserted between the amplifier circuit and the second sub winding.

5. The current injection type active filter according to claim 1, wherein the first sub winding and the second sub winding are insulated from earth.

6. The current injection type active filter according to claim 1, further comprising a first surge protective element connected to the detection transformer and a second surge protective element connected to the injection transformer.

7. The current injection type active filter according to claim 1, wherein a respective one of the first main winding and the second main winding forms a common-mode choke coil configured to reduce common-mode noise generated in the power supply lines.

8. A circuit comprising:
the current injection type active filter according to any one of claims 1 to 7;
an X capacitor inserted between the power supply lines; and
a Y capacitor inserted between the one of the power supply lines and ground.
